# EUROPEAN PATENT APPLICATION

(11) **EP 0 632 634 A2**
(43) Date of publication of application: **04.01.1995**
(21) Application number: 94110073.7
(22) Date of filing: 29.06.1994
(51) Int. Cl.: H04M 3/24, H04Q 11/04

(54) **Method and module for permitting the test of a digital telephone exchange**

(30) Priority: 29.06.1993 IT MI931388
(71) Applicant: ALCATEL N.V., NL-2288 BH Rijswijk (NL)
(72) Inventor: Baldi, Mariano, I-84100 Salerno (IT); Magliano, Giovanni, I-84013 Cava Dei Tirreni (SA) (IT)
(74) Representative: Pohl, Herbert, Dipl.-Ing

(57) **Abstract**

The present invention relates to a method and to a module for permitting the test of a digital telephone exchange (DSN) receiving at its input and outputting TDM digital signals, in particular multiple PCM ones.

Through the use of a queue handler (QRC), a more advantageously programmable one, as an interface between at least one test desk (TD) and a digital telephone exchange (DSN) the possibility of carrying out a test with high flexibility is obtained.

## Description

The present invention relates to a method and a module for permitting the test of a digital telephone exchange receiving at its input and outputting TDM digital signals, in particular multiple PCM signals.

It is well known that telephone exchanges need various tests both during the production of single modules composing them and during assembling and set up as well as during their normal operation. A lot of tests have to be carried out.

The present invention particularly relates to the following tests: call simulation; protocol analysis; transmission; reception and level measurement of single and multiple tones; noise measurements; line-error-rate and bit-error-rate measurements; service calls; discreet listening. Such tests are usually carried out through the use of so-called test desks connected to the telephone exchange.

It is an object of the present invention to provide a method and a relative circuit which allow the testing of a digital telephone exchange without limitation as to the number of test desks, as to the type of test to be realized and as to the type of information (speech, video, data, ...) handled by the exchange. These requirements are very important to achieve because of the very fast evolution in the field of telecommunication as to both used techniques and services offered.

This object is reached through the method as set forth in claim 1, through the module as set forth in claim 9 and through the telephone exchange as set forth in claim 14. Further advantageous aspects of the present invention are set forth in the subclaims.

Through the use of a queue handler, more advantageously a programmable one, as an interface between at least one test desk and one digital telephone exchange receiving at its input and outputting TDM digital signals, the possibility of carrying out tests with high flexibility is obtained.

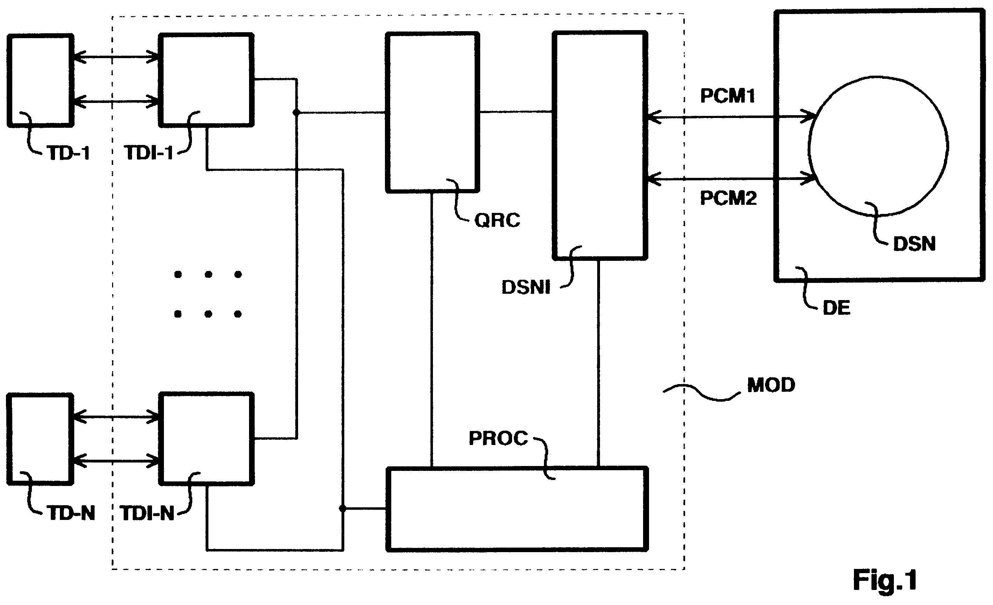

The present invention will become more apparent from the following description taken in conjunction with the attached drawings wherein:
- Fig. 1: is a block diagram of a module in accordance with the present invention connected to some test desks and to a telephone exchange, and
- Fig. 2: is a more detailed block diagram of an interface to test desks comprised in the module of Fig. 1.
In describing the method according to the present invention, reference is made to Fig. 1 where CD indicates a digital telephone exchange. DSN indicates its digital switching network, MOD indicates a module in accordance with the present invention and TD, without any suffix, a generic test desk; conceptually N test desks are represented in the figure indicated by TD-1, ..., TD-N. Exchange DE, or better, the switching network DSN, is connected to module MOD through two bidirectional multiple PCM links, indicated by PCM1 and PCM2, that correspond, therefore, to four physical data streams.

The method in accordance with the present invention permits the test of the digital telephone exchange DE comprising the digital switching network DSN receiving at its input and outputting TDM digital signals (like the bidirectional multiple PCM signals), through the use of the module MOD connected to the network DSN through at least one physical data stream, e.g. one of the two components of PCM1, and to at least one test desk TD; the physical stream is composed of logical data streams: in case of multiple PCM signals, the logical streams are 32, thirty of which are for users and two are service streams

Module MOD determines a test connection between the desk TD and the network DSN through the sending of switching commands, relative to logical streams, to the network itself, and the data exchange between desk TD and the physical stream occurs through the use of a number of queues at least equal to the number of logical streams.

Although the figure refers to PCM signals and therefore to conventional telephone communication systems, such a method can be applied also, e.g., in the ATM technology still adapting suitably the concept of logical stream to the cells having in common, e.g., the same VCI (Virtual Connection Identifier) field, or the same VPI (Virtual Path Identifier) field; such fields can be thought of as corresponding both to their source and to their destination.

According to such method, a first possibility consists in that module MOD carries out the steps of
a) sending switching commands to network DSN, capable of determining the logical stream sources,
b) receiving data from the physical stream and storing them into the queues correspondingly to their source, and
c) providing data to desk TD by extracting them from at least one of the queues. It may be useful, e.g. for the discreet listening of the telephone conversations, to make data supplied to desk TD correspond to a combination of data extracted from at least two of the queues. According to such a method a second possibility consists in that module MOD carries out the steps of:
d) sending switching commands to network DSN, capable of determining the destination of logical streams,
e) receiving test data from desk TD and storing them in at least one of the queues, and
f) transmitting data contained in the queues through the physical stream.

Naturally, the two possibilities can be combined, and hence step b) can be realized on a first physical stream and step f) can be realized on a second physical stream, and the number of queues used can be chosen equal to the sum of the number of logical streams composing said first and said second physical stream; for instance, the two physical streams, which, of course, have opposite directions, can correspond to the two physical streams that compose the same bidirectional multiple PCM link PCM1 or PCM2.

Still combining the two possibilities it can be seen that steps a), b), c) precede in time steps d), e), f), and all such steps on the whole allow a complete test cycle.

The exchange of data between the test desk TD and the network DSN may occur advantageously through the use of at least one further queue associated with the test desk TD itself; naturally if the test desks are more than one it is necessary to provide a further queue for each test desk.

Still more advantageously, two further queues associated with each test desk can be provided, one for each direction of data exchange, i.e. one queue for data travelling from the test desk to the switching network and one queue for data travelling from the switching network to the test desk.

The module in accordance with the present invention will now be described with reference to Fig. 1.

According to the present invention in order to allow the test of the digital exchange DE, which comprises the digital switching network DSN and which receives at its input and outputs TDM digital signals (PCM1, PCM2) through at least one test desk TD, module MOD comprises:
a) at least one interface TDI toward the test desk TD,
b) an interface DSNI to the digital switching network DSN,
c) a queue handler QRC connected to interfaces TDI and DSNI, and
d) a control processor PROC designed to control the data exchange between the interfaces TDI, DSNI and the queue handler QRC.

As shown in Fig. 1, the test desks can be more than one, indicated by TD-1, ..., TD-N, and hence also the interfaces will be the same number, indicated by TDI-1, ..., TDI-N; TDI without any suffix indicates the generic interface to test desk.

In the illustrated embodiment the queue handler QRC is connected from one side to interface DSNI through a bidirectional serial link, and from the other side to interfaces TDI through another bidirectional serial link; it is capable of storing data received at its input from both interfaces into queues, called also FIFO memories and of outputting data to the interfaces extracting them from queues.

Such a device is described, e.g. in EP-A 0164972 and the associated Fig. 1 is a block diagram thereof.

In the EP-A 0492177 a device is disclosed which, when connected to an external RAM memory, is capable of carrying out the functions requested to the queue handler QRC under control of processor PROC; such a device is already pre-established for connection to PCM serial lines; moreover, it is programmable in its functions and as to number of queues, type of data forming such queues, and criteria for the automatic insertion and extraction of data into and out of such queues.

In the embodiment, processor PROC has the function of controlling the operation of interfaces DSNI and TDI: for instance it selects which of the two links PCM1 and PCM2 must be sent to handler QRC and further it extracts and inserts control information into the control channels of such links; control information from and to the interfaces TDI is separately processed in the same way.

If module MOD comprises a plurality of interfaces to test desks, indicated by TDI-1, ..., TDI-N in Fig. 1, such interfaces can be, e.g., connected together with the queue handler QRC through at least one TDM link. In particular the serial link may have a frame structure having a number of subdivisions equal to the number of interfaces and associated there with a permanent manner. Naturally if it is to be contemplated that the data exchange is bidirectional between interfaces TDI and handler QRC, it is necessary to provide at least two TDM links, one for each direction of data exchange.

Reference has been made previously to the possibility of control information between processor PROC and interfaces TDI; to this end, processor PROC is connected to interfaces TDI through a first event signalling link to the test desks TD and a second event signalling link to the test desks TD; for such links, one can, e.g., make the various interfaces TDI be seen by processor PROC as normal peripheral units and therefore be selected through an own address; this does not exclude that data are sent in parallel to all interfaces TDI through dedicated serial links.

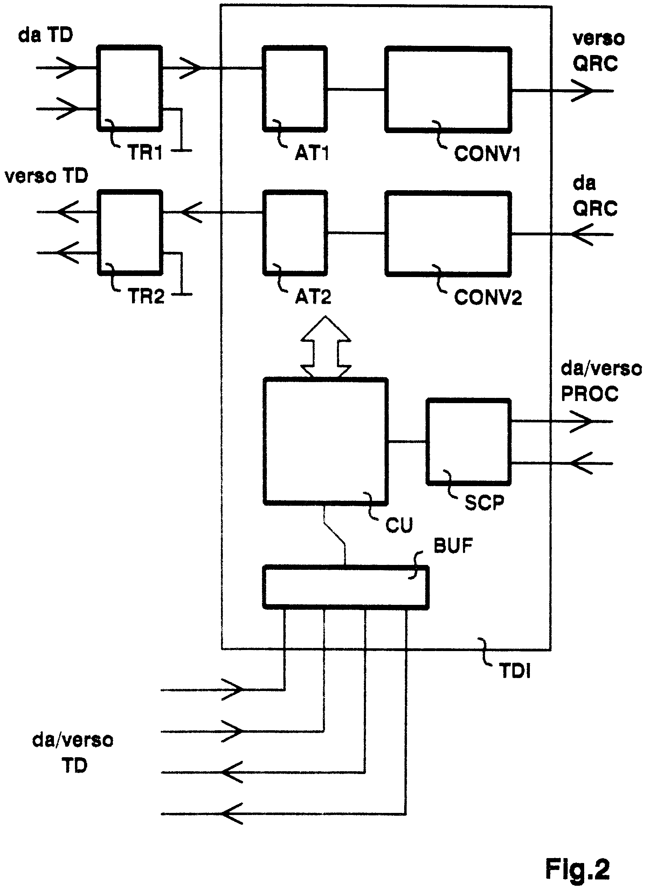

For purposes of completeness, a possible structure of the inter race TDI will now be described with reference to the block diagram of Fig. 2.

The interface TDI shown in Fig. 2 comprises a control unit CU, a serial control port SCP, a buffer BUF, a first and a second programmable converters CONV1 and CONV2, a first and a second programmable attenuators AT1 and AT2; additionally in Fig. 2 there are represented a first and a second transfers TR1 and TR2 external to the interface TDI: these can be unnecessary if the test desk TD generates and receives unbalanced signals, or they can be already included in the test desk TD, or still more they can be included in the interface TDI.

Analog signals from desk TD reach the interface TDI entering attenuator AT1 and then are fed to converter CONV1; such converter realizes a filtering, an analog to digital conversion and a coding, and ultimately it transmits, on a serial link, data to the handler QRC on the basis of frame synchronizing signals and of bits received by the handler itself and not shown in the figure.

Data for desk TD come from handler QRC to interface TDI via a serial link; such data are received and extracted from converter CONV2 on the basis of frame synchronizing signals and of bits received by the handler itself and not shown in the figure; converter CONV2 realizes a decoding, a digital-to-analog conversion, and a filtering, and feeds the analog signal thus obtained to attenuator AT2 that in turn sends it to desk TD.

Such operations are carried out under control of the control unit CU; the latter, moreover, receives at its input and outputs control signals from and to processor PROC through port SCP.

Still unit CU controls the sending of event signalling to desk TD and the reception of event signalling from desk TD through buffer BUF. Such events can be, e.g., either the hook-off of the handset present on desk TD, or the line-engaged signalling. In the embodiment, two lines toward desk TD and two lines from desk TD are contemplated.

Besides the programming of the programmable devices it can be useful to contemplate the possibility of directly connecting the output analog signal with the input analog signal.

It is clear that such module MOD just described, can be used advantageously in a telephone exchange and be integrated therein like many other exchange modules.

## Claims

1. Method of permitting the test of a digital telephone exchange, comprising at least a digital switching network receiving at its input and outputting TDM digital signals, through the use of a module connected to said network through at least one physical data stream and at least one test desk, said physical stream being composed of logical data streams, wherein said module determines a test connection between said desk and said network through the sending of switching commands relative to said logical stream, to said network, and wherein the exchange of data between said desk and said physical stream occurs through the use of a number of queues at least equal to the number of said logical streams.

2. Method according to claim 1, wherein said module carries out the steps of:
a) sending switching commands to said network, capable of determining the sources of said logical streams,
b) receiving data from said physical stream and storing them in said queues correspondingly to their source, and
c) providing said desk with data extracted from at least one of said queues.

3. Method according to claim 2, wherein data fed to said desk correspond to a combination of data extracted from at least two of said queues.

4. Method according to claim 1, wherein said module carries out the steps of:
d) sending switching commands to said network, capable of determining the destinations of said logical streams,
e) receiving test data from said desk and storing them in at least one of said queues, and
f) transmitting data contained in said queues through said physical stream.

5. Method according to claims 2 and 4, wherein said step b) is realized on a first physical stream and said step f) is realized on a second physical stream, and wherein the number of queues used is equal to the sum of the number of logical streams composing said first and second physical streams.

6. Method according to claims 2 and 4, wherein said steps a), b), c) are prior in time with respect to said steps d), e), f), and all said steps on the whole allow a complete test cycle.

7. Method according to claim 1, wherein said exchange of data occurs through the use of at least one further queue associated with said at least one test desk.

8. Method according to claim 7, wherein said exchange of data occurs through the use of at least two further queues associated with said at least one test desk, one for each direction of exchange.

9. Module (MOD) for permitting the test of a digital telephone exchange (DE), comprising a digital switching network (DBN) receiving at its input and outputting TDM digital signals (PCM1, PCM2), through at least one test desk (TD), said module comprising:
a) at least one interface (TDI) to said test desk (TD),
b) an interface (DSNI) to said digital switching network (DSN),
c) a queue handler (QRC) connected with said interfaces (TDI, DSNI), and
d) a control processor (PROC) capable of controlling the data exchange between said interfaces (TDI, DSNI) and said queue handler (QRC).

10. Module according to claim 9, characterized in that it comprises a plurality of interfaces (TDI-1, ..., TDI-N) to test desks, and in that said interfaces (TDI-1, ..., TDI-N) to test desks are connected together and to said queue handler (QRC) through at least one TDM link.

11. Module according to claim 10, characterized in that said interfaces (TDI-1, TDI-N) to test desks are connected together and to said queue handler (QRC) through two TDM links, one for each direction of data exchange.

12. Module according to claim 9, characterized in that said processor (PROC) is connected with said at least one interface (TDI) to said test desk (TD) through a first link for signalling events to said test desk (TD) and a second link for signalling events from said test desk (TD).

13. Module according to claim 9, characterized in that said queue handler (QRC) is programmable as to number of queues, type of data forming said queues, criteria for automatic insertion and extraction of data in and from said queues.

14. Telephone exchange (DE) of the type comprising a digital network exchange (DSN) receiving at its input and outputting TDM digital signals (PCM1, PCM2), characterized in that it comprises at least one module (MOD) as claimed in claim 9 connected with this network.
